# EUROPEAN PATENT APPLICATION

(11) **EP 4 349 799 A1**
(43) Date of publication of application: **10.04.2024**
(21) Application number: 23195094.0
(22) Date of filing: 04.09.2023
(51) Int. Cl.: C04B 35/462, C04B 35/488, C04B 41/45, C04B 41/52, C23C 28/00, C04B 41/87

(54) **BARRIER COATING FOR GAS TURBINE ENGINE COMPONENTS**

(30) Priority: 03.10.2022 GB 202214491
(71) Applicant: Rolls-Royce plc, London N1 9FX (GB)
(72) Inventor: Brewster, James, Derby, DE24 8BJ (GB); Cao, Xuezhen, Derby, DE24 8BJ (GB); Xiao, Ping, Derby, DE24 8BJ (GB)
(74) Representative: Rolls-Royce plc

(57) **Abstract**

A barrier coating (110) for a substrate (102) that has a major surface (104). The barrier coating (110) comprises: a bond coat layer (112) disposed on the major surface (104) of the substrate (102); a thermally grown oxide (TGO) layer (114) disposed on the bond coat layer (112) opposite to the major surface (104) of the substrate (102); and at least one top coat layer (116) disposed on the TGO layer (114) opposite to the bond coat layer (112). The at least one top coat layer (116) comprises a ceramic top coat material (120) that comprises: a first phase (122) consisting of a compound having a formula A₂B₂O₇, where A is a rare-earth element, B is selected from the group consisting of zirconium, hafnium and titanium, and O is oxygen; and a second phase (124) dispersed in the first phase and consisting of a compound having a formula CDO₄, where C is a rare-earth element, D is niobium or tantalum, and O is oxygen.

## Description

### Field

The present invention generally relates to a barrier coating for a substrate that has a major surface, for example a gas turbine engine component.

### Background

Thermal and environmental barrier coatings are often applied on surfaces of high temperature components of gas turbine engines, such as combustors, turbines, exhaust sections, etc. Such coatings may insulate the high temperature components in addition to protecting the coated components from oxidation and corrosion at high temperatures, and mechanical damage during operation of the gas turbine engine. Conventional materials used for such coatings may include yttria stabilised zirconia, low conductivity stabilised zirconia, gadolinium zirconate, ytterbium silicates, etc.

Gadolinium zirconate may be advantageous over other materials due to its propensity to react with calcium-magnesium-alumino-silicates (CMAS), that typically deposit on the coated components during operation of the gas turbine engine, to form a rare earth (RE)-apatite layer comprising, e.g., gadolinium calcium silicate or Gd₈Ca₂(SiO₄)₆O₂. Formation of an apatite layer may decelerate further CMAS penetration into the coating.

However, gadolinium zirconate may be less suitable as a coating material due its lower fracture toughness, thereby increasing susceptibility of the coating to cold-shock delamination during engine shutdown after the CMAS infiltration and the chemical reaction with CMAS. This may result in loss of the CMAS infiltrated and reacted layer (i.e., the RE-apatite layer) causing further degradation and loss of the coating. Additionally, due to lower fracture toughness, the coating may be more susceptible to ballistic impact damage, resulting in increased degradation during operation of the gas turbine engine.

### Summary

The present invention provides a barrier coating, a composite article, a gas turbine engine, and a method for manufacturing a component of a gas turbine engine, as set out in the appended claims. Optional features are included in the dependent claims.

According to a first aspect, there is provided a barrier coating for a substrate including a major surface. The barrier coating includes a bond coat layer disposed on the major surface of the substrate. The barrier coating further includes a thermally grown oxide (TGO) layer disposed on the bond coat layer opposite to the major surface of the substrate. The barrier coating further includes at least one top coat layer disposed on the TGO layer opposite to the bond coat layer. The at least one top coat layer includes a ceramic top coat material. The ceramic top coat material includes a first phase consisting of a compound having a formula A₂B₂O₇, where A is one or more rare-earth element (RE), B is selected from the group consisting of zirconium, hafnium and titanium, and O is oxygen. The ceramic top coat material further includes a second phase dispersed in the first phase and consisting of a compound having a formula CDO₄, where C is one or more rare-earth element, D is selected from the group consisting of niobium or tantalum, and O is oxygen.

The ceramic top coat material of the barrier coating includes a two-phase material, i.e., a material including the first phase and the second phase. As compared to conventional ceramic top coat materials consisting only of the first phase, presence of the second phase dispersed in the first phase may result in an improved fracture toughness of the ceramic top coat material by virtue of the interface between the first phase and the second phase. The second phase is dispersed in the first phase so as to form a material, i.e. the ceramic top coat material, that has desirable fracture toughness. The improvement in the fracture toughness may be attributed to, e.g., crack bridging mechanisms, crack shielding mechanisms, etc. Further, since the first phase and/or the second phase may react with calcium-magnesium-alumino-silicates (CMAS) and form RE-apatite phases, protection against CMAS is also maintained with the ceramic top coat material.

In some embodiments, the ceramic top coat material consists of: the first phase that consists of a compound having a formula A₂B₂O₇, where A is one or more rare-earth element (RE), B is selected from the group consisting of zirconium, hafnium and titanium, and O is oxygen, and the second phase that is dispersed in the first phase and consists of a compound having a formula CDO₄, where C is one or more rare-earth element, D is selected from the group consisting of niobium or tantalum, and O is oxygen.

In some embodiments, each of A and C is selected from the group consisting of gadolinium, lanthanum and yttrium. Presence of these elements in the first phase and/or the second phase may allow the first phase and/or the second phase to react with CMAS, that typically deposit on the ceramic top coat material, to form RE-apatite phases. It may be preferable to use RE-cations (i.e., element A) with a large radius in the ceramic top coat material as this may promote a larger volume of the RE-apatite phase during early stage of reaction with CMAS in order to limit further infiltration of CMAS into the ceramic top coat material.

In some embodiments, A is lanthanum and C is gadolinium.

In some embodiments, each of A and C is lanthanum.

In some embodiments, D is niobium.

In some embodiments, the ceramic top coat material of the barrier coating includes greater than 0 mol.% and less than 100 mol.% of the second phase. The fracture toughness of the ceramic top coat material may increase in proportion to an increase in the mol.% of the second phase dispersed in the first phase.

In some embodiments, at least one of the first phase and the second phase of the ceramic top coat material is configured to react with molten silicates. The first phase and/or the second phase may react with the CMAS to form the RE-apatite phases that may resist further CMAS penetration into the ceramic top coat material.

In some embodiments, the first phase and the second phase together form 100% by weight of the ceramic top coat material.

In some embodiments, the bond coat layer of the barrier coating includes an alloy. In some embodiments, the alloy includes at least one element selected from the group consisting of aluminium, silicon and chromium. Such a bond coat layer may act as an adherent layer for the thermally grown oxide (TGO) layer.

In some embodiments, the barrier coating is a thermal barrier coating or an environmental barrier coating. Thus, the barrier coating may protect the substrate from hot gases and may increase an operational life of the substrate by preventing failure due to oxidation, corrosion, and thermomechanical fatigue.

According to a second aspect, there is provided a composite article. The composite article includes a substrate that has a major surface. The composite article further includes the barrier coating of the first aspect disposed on the major surface of the substrate. The barrier coating may protect the major surface of the substrate from hot gases and may increase an operational life of the composite article.

In some embodiments, the substrate is selected from the group consisting of steels, alloys, superalloys, refractory metals, inter-metallics, and ceramic matrix composite materials.

According to a third aspect, there is provided a gas turbine engine including the composite article of second aspect.

According to a fourth aspect, there is provided a method for manufacturing a component of a gas turbine engine. The method includes coating the component with the barrier coating of the first aspect.

In some embodiments, the component is coated with the barrier coating using at least one of electron-beam physical vapour deposition (EB-PVD), suspension plasma spraying (SPS), solution precursor plasma spraying (SPPS), air plasma spraying (APS), and high-velocity oxygen fuel (HVOF) process.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a schematic sectional side view of a gas turbine engine;
**Figure 2** is a schematic sectional side view of a portion of a composite article that includes a barrier coating disposed on a major surface of a substrate;
**Figure 3** is a schematic top view of a portion of a top coat layer of the composite article;
**Figure 4** is a schematic sectional side view of a component of the gas turbine engine illustrating a coating process;
**Figure 5** is a flow chart illustrating a method for manufacturing the component of the gas turbine engine;
**Figure 6A-6E** are micrographs of a portion of a surface of x GdNbO₄ / (1-x) La₂Zr₂O₇ composites (where x = 0, 0.1, 0.3, and 0.5;
**Figures 7A-7E** are micrographs showing indentation of the surface of x GdNbO4 / (1-x) La₂Zr₂O₇ composites shown in **Figures 6A-6E** using Berkovich pyramid indenter;
**Figure 8** is a schematic graph showing fracture toughness of lanthanum zirconate (La₂Zr₂O₇) with an increasing mole fraction of gadolinium niobate (GdNbO₄) as determined using Berkovich pyramid indenter; and
**Figure 9** is a schematic graph showing x-ray diffraction (XRD) reflections of x GdNbO₄ / (1-x) La₂Zr₂O₇ composites (where x = 0, 0.1, 0.3, 0.5).

### Detailed description

Aspects and embodiments of the present invention will now be discussed with reference to the accompanying figures. Further aspects and embodiments will be apparent to those skilled in the art.

Chemical elements are discussed in the present disclosure using their common chemical abbreviations, such as commonly found on a periodic table of elements. For example, hydrogen is represented by its common chemical abbreviation H; helium is represented by its common chemical abbreviation He; and so forth.

As used herein, the term "rare-earth (RE) element" refers to a Group IIIB element (i.e., a lanthanoid) or yttrium in the periodic table of elements. The group of elements known as rare-earth elements includes, for example, elements 57-71 (i.e., La, Ce, Pr, Nd, Pm, Sm, Eu, Gd, Tb, Dy, Ho, Er, Tm, Yb, and Lu) and yttrium.

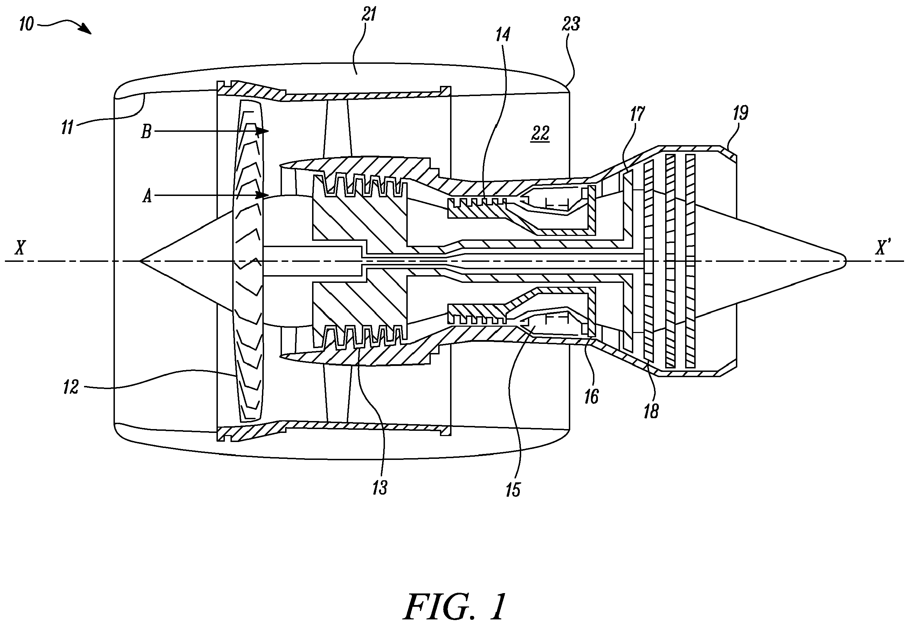

**Figure 1** shows a schematic sectional side view of a gas turbine engine 10 having a principal and rotational axis X-X'. The gas turbine engine 10 includes, in axial flow series, an air intake 11, a compressive fan 12 (which may also be referred to as a low-pressure compressor), an intermediate pressure compressor 13, a high-pressure compressor 14, combustion equipment 15, a high-pressure turbine 16, an intermediate pressure turbine 17, a low-pressure turbine 18, and a core exhaust nozzle 19. A nacelle 21 generally surrounds the gas turbine engine 10 and defines the air intake 11, a bypass duct 22 and a bypass exhaust nozzle 23.

The gas turbine engine 10 works in a conventional manner so that the air entering the air intake 11 is accelerated by the compressive fan 12 to produce two air flows: a first air flow A into the intermediate pressure compressor 13 and a second air flow B which passes through the bypass duct 22 to provide a propulsive thrust. The intermediate pressure compressor 13 compresses the first air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resulting hot combustion products then expand through, and thereby drive the high, intermediate, and low-pressure turbines 16, 17, 18 before being exhausted through the core exhaust nozzle 19 to provide additional propulsive thrust. The high, intermediate, and low-pressure turbines 16, 17, 18 respectively drive the high and intermediate pressure compressors, 14, 13, and the compressive fan 12 by suitable interconnecting shafts.

In some embodiments, the gas turbine engine 10 is used in an aircraft. In some embodiments, the gas turbine engine 10 is an ultra-high bypass ratio engine (UHBPR). In addition, the present invention is equally applicable to aero gas turbine engines, marine gas turbine engines and land-based gas turbine engines.

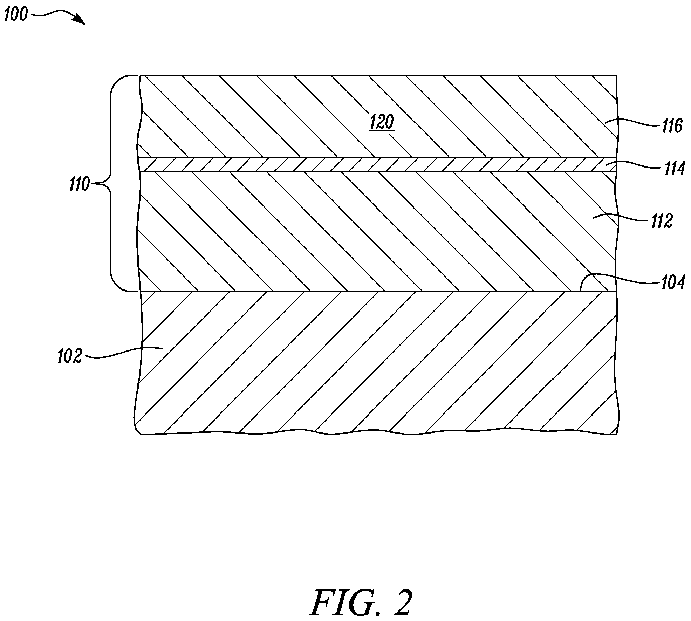

**Figure 2** is a schematic sectional side view of a portion of a composite article 100. In some embodiments, the composite article 100 is a part of the gas turbine engine 10 (shown in Figure 1). In some embodiments, the composite article 100 includes a substrate 102 including a major surface 104. In some embodiments, the substrate 102 is selected from the group consisting of steels, alloys (e.g., iron-based alloys), superalloys, refractory metals, inter-metallics, and ceramic matrix composite materials, such as those based on silicon carbide or alumina. In some embodiments, the substrate 102 may be a high-temperature material, such as a superalloy. It should be understood that the substrate 102 may include any material based on application requirements.

Suitable alloys for the substrate 102 may include, but are not limited to, nickel-based superalloys, cobalt-based superalloys, iron-based superalloys, low sulphur nickel-based superalloys, low sulphur cobalt-based superalloys, low sulphur iron-based superalloys, etc. Such superalloys may typically include a polycrystalline structure but may have portions with a single-crystal or directionally solidified crystalline structure. In some embodiments, the substrate 102 may include nickel-based superalloys commercially available under the trademark Inconel^{®}. In some embodiments, the substrate 102 may include silicon carbide-silicon carbide (SiC-SiC) matrix composites.

The composite article 100 further includes a barrier coating 110 for the substrate 102. Specifically, the barrier coating 110 is disposed on the major surface 104 of the substrate 102. In some embodiments, the barrier coating 110 is a thermal barrier coating (TBC) or an environmental barrier coating (EBC). In some embodiments, the barrier coating 110 may protect the substrate 102 from hot gases and may increase an operational life of the substrate 102 by preventing failure due to oxidation, corrosion, and thermomechanical fatigue.

As used herein, the terms "TBC", "TBCs", "EBC" or "EBCs", generally refer to stabilized ceramics that may sustain a fairly high temperature gradient, such that the substrate 102 may be operated at temperatures higher than a melting point of a material of the substrate 102. In some embodiments, the barrier coating 110 may be a multi-layered coating, with materials and microstructures of individual layers chosen to achieve an optimal performance of the barrier coating 110. In some embodiments, the composite article 100 may further include one or more layers (e.g., abradable layers, etc.) above or below the barrier coating 110. In some embodiments, the barrier coating 110 may cover an entire extent of the major surface 104 in the plane of the composite article 100.

In some embodiments, the barrier coating 110 includes a bond coat layer 112 disposed on the major surface 104 of the substrate 102. In some embodiments, the bond coat layer 112 may be an oxidation-resistant metallic layer. In some embodiments, the bond coat layer 112 includes an alloy. In some embodiments, the alloy includes at least one element selected from the group consisting of aluminium, silicon and chromium in order to form a slow growing oxide scale (e.g., alumina, silica, and chromia). In some embodiments, the bond coat layer 112 may include an aluminium containing alloy, such as MCrAlY, where M = Nickel (Ni) and/or Cobalt (Co), or an aluminium-based intermetallic, such as nickel aluminide, containing varying amounts of platinum (Pt) and/or rare earth elements, such hafnium (Hf). In some embodiments, the bond coat layer 112 may include silica.

In some embodiments, the barrier coating 110 further includes a thermally grown oxide (TGO) layer 114 disposed on the bond coat layer 112 opposite to the major surface 104 of the substrate 102. In some embodiments, the TGO layer 114 may be formed when the bond coat layer 112 is exposed to oxygen at high temperatures. Such a layer may further impede oxidation and hot corrosion of the substrate 102.

The barrier coating 110 includes at least one top coat layer 116 disposed on the TGO layer 114 opposite to the bond coat layer 112. The at least one top coat layer 116 includes a ceramic top coat material 120. In some embodiments, the bond coat layer 112 may enhance adhesion of the top coat layer 116 to the major surface 104 of the substrate 102 and may reduce a rate of oxidation of the substrate 102. In some embodiments, the top coat layer 116, the TGO layer 114, and the bond coat layer 112 may be formed using vapour deposition techniques or diffusion-based processes. The term "at least one top coat layer 116" is interchangeably used hereinafter as the "top coat layer 116". In the illustrated embodiment of Figure 2, the at least one top coat layer 116 includes a single top coat layer 116. However, in some other embodiments, the at least one top coat layer 116 may include multiple top coat layers 116 disposed adjacent to each other.

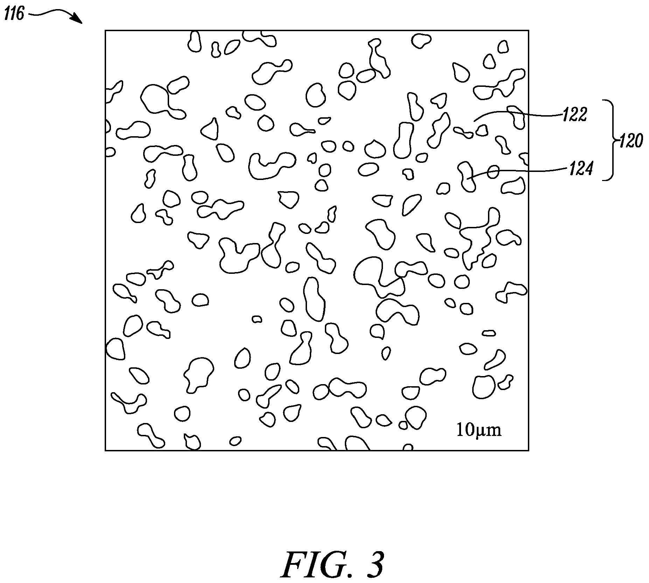

**Figure** 3 is a schematic top view of a portion of the top coat layer 116. The ceramic top coat material 120 of the top coat layer 116 includes a first phase 122 consisting of a compound having a formula A₂B₂O₇, where A is a rare-earth (RE) element, B is selected from the group consisting of zirconium, hafnium and titanium, and O is oxygen. The ceramic top coat material 120 further incudes a second phase 124 dispersed in the first phase 122 and consisting of a compound having a formula CDO₄, where C is a rare-earth element, D is niobium or tantalum, and O is oxygen.

In some embodiments, the ceramic top coat material 120 includes greater than 0 mole (mol.)% and less than 100 mol.% of the second phase 124. In some embodiments, the ceramic top coat material 120 may include greater than 10 mol.%, greater than 30 mol.%, greater than 50 mol.%, greater than 70 mol.%, or greater than 90 mol.% of the second phase 124. In some embodiments, the first phase 122 and the second phase 124 together form 100% by weight of the ceramic top coat material 120.

In some embodiments, each of A and C is selected from the group consisting of gadolinium, lanthanum and yttrium. In some embodiments, A is lanthanum and C is gadolinium. For example, the first phase 122 may consist of La₂Zr₂O₇ and the second phase 124 may consist of GdNbO₄. Another example of the first phase 122 of the ceramic top coat material 120 may include gadolinium zirconate (Gd₂Zr₂O₇). In some embodiments, each of A and C is lanthanum. For example, during preparation of the ceramic top coat material 120 through pressure-less sintering, the first phase 122 consisting of La₂Zr₂O₇ and the second phase 124 consisting of LaNbO₄ may be obtained. In some embodiments, D is niobium.

In some embodiments, the ceramic top coat material 120 may include lanthanum magnesium hexa-aluminate (LaMgAl₁₁O₁₉) or strontium zirconium trioxide (SrZrOa). In some embodiments, the ceramic top coat material 120 may also include one or more materials from the group consisting of yttrium monosilicate, yttrium disilicate, rare-earth silicates (both rare-earth monosilicates and rare-earth disilicates), alkaline-earth aluminosilicates, such as barium-strontium-aluminosilicate, niobium oxide, tantalum oxide, zirconium oxide, hafnium oxide, yttrium oxide, titanium oxide, mullite, rare-earth oxides, magnesium-spinel (Mg-spinel), such as magnesium aluminate spinel (MgAl₂O₄ spinel), and mixtures and compounds thereof. In some other embodiments, the ceramic top coat material 120 may include a variety of metal sources including, but are not limited to, aluminium, chromium, tantalum, niobium, silicon, molybdenum, hafnium, titanium, zirconium, platinum, palladium, gold, and mixtures and alloys thereof.

The ceramic top coat material 120 includes a two-phase material, i.e., a material including the first phase 122 and the second phase 124. As compared to conventional ceramic top coat materials consisting only of the first phase 122, presence of the second phase 124 dispersed in the first phase 122 may result in an improved fracture toughness of the ceramic top coat material 120 by virtue of the interface between the first phase 122 and the second phase 124. The improvement in the fracture toughness may be attributed to, e.g., crack bridging mechanisms, crack shielding mechanisms, etc. The fracture toughness of the ceramic top coat material 120 may increase in proportion to an increase in the mol.% of the second phase 124 dispersed in the first phase 122.

In some embodiments, at least one of the first phase 122 and the second phase 124 is configured to react with molten silicates, such as calcium-magnesium-alumino-silicates (CMAS). In other words, the first phase 122 and/or the second phase 124 is configured to react with CMAS when CMAS deposits and melts on the surface of the barrier coating 110 (shown in Figure 2), thereby forming RE-apatite phases. This may resist further CMAS penetration into the barrier coating 110. Since the first phase 122 and/or the second phase 124 may react with calcium-magnesium-alumino-silicates (CMAS) and form RE-apatite phases, protection against CMAS is also maintained by the barrier coating 110 of the present invention. It may be preferable to use RE-cations (i.e., element A) with a large radius in the ceramic top coat material 120 as this may promote a larger volume of the RE-apatite phase during early stage of reaction with CMAS in order to limit further infiltration of CMAS into the barrier coating 110.

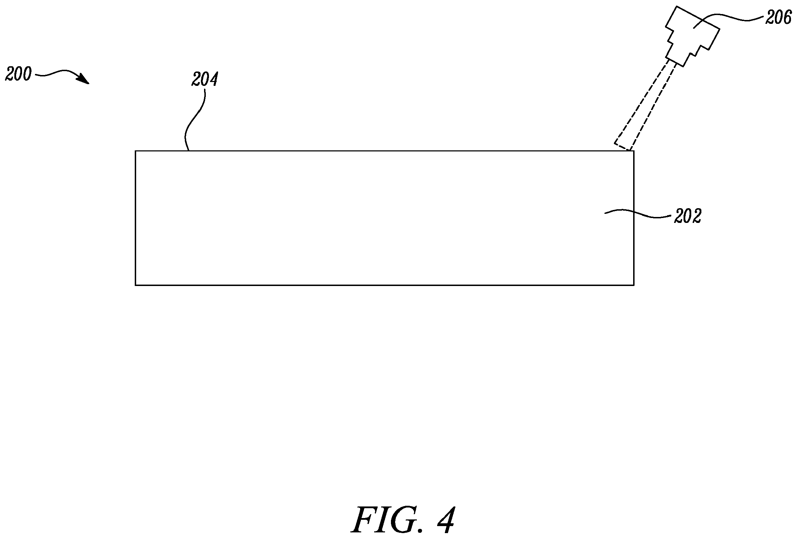

**Figure 4** is a schematic sectional side view of a component 200 of the gas turbine engine 10 (shown in Figure 1) illustrating a coating process. In some embodiments, the component 200 includes a substrate 202 having a major surface 204. In some embodiments, the substrate 202 may include a material selected from the group consisting of steels, alloys (e.g., iron-based alloys), superalloys, refractory metals, inter-metallics, and ceramic matrix composite materials, such as those based on silicon carbide or alumina. In some embodiments, the substrate 202 may be a superalloy.

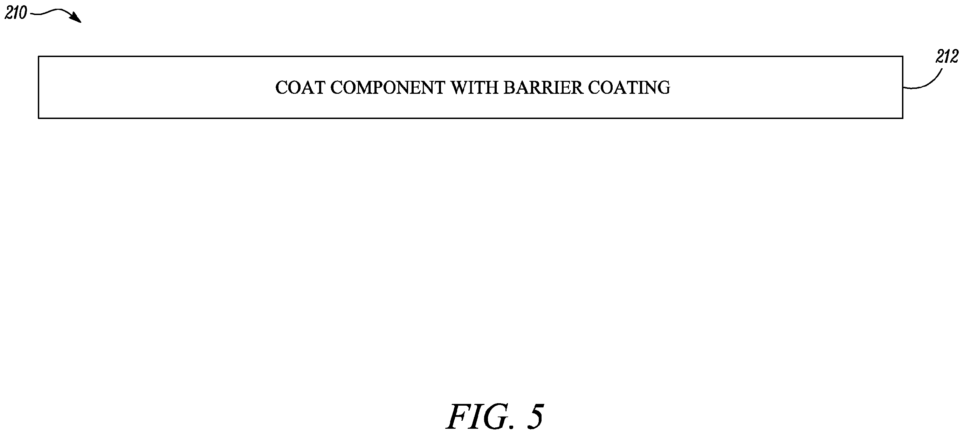

**Figure 5** is a flow chart illustrating a method 210 for manufacturing the component 200 (shown in Figure 4) of the gas turbine engine 10 (shown in Figure 1). With reference to Figures 2, 4 and 5, at step 212, the method 210 includes coating the component 200 with the barrier coating 110, e.g., using a coating head 206. In some embodiments, various layers of the barrier coating 110 may be sequentially coated on the major surface 204 of the component 200 using the coating head 206.

In some embodiments, the component 200 is coated with the barrier coating 110 using at least one of electron-beam physical vapour deposition (EB-PVD), suspension plasma spraying (SPS), solution precursor plasma spraying (SPPS), air plasma spraying (APS), and high-velocity oxygen fuel (HVOF) process. However, it should be understood that any known method may be utilized for coating the component 200 with the barrier coating 110.

### Examples

### The following examples are offered for illustrative purposes only

First, gadolinium niobate (GdNbO₄) powders were prepared by a solid state reaction. The raw niobium oxide (Nb₂O₅, Sigma Aldrich, UK, 99.99% purity) and gadolinium oxide powders (Gd₂O₃, Sigma Aldrich, UK, 99.99% purity) were calcined at 1000 degree Celsius (°C) for 4 hours (h) to remove moisture, hydroxides, and carbonates. Then the raw powders were mixed stoichiometrically, and ball milled with zirconia media in ethanol for 24 hours (h) to achieve uniformity. The suspension was then dried overnight in the oven at 80 °C. After that, the dried mixture was pre-sintered at 1250 °C for 10 h and then grinded to obtain GdNbO₄ powders.

Second, lanthanum zirconate (La₂Zr₂O₇) and x mol.% (where x = 0, 10, 30, 50) GdNbO₄ powders were mixed by ball milling for 24 h with zirconia media. The obtained suspension was dried at 80 °C overnight, followed by sieving via 63 micrometres (µm) sieve. Then the powders of x GdNbO₄ / (1-x) La₂Zr₂O₇ (where x=0, 0.1, 0.3, 0.5) were cold-pressed under uniaxial pressure into green bulks (φ 6 millimetre or mm × 2 mm discs). Ultimately, the green bulks were pressure-less sintered at 1600 °C for 12 h to obtain dense specimens. Moreover, the 0.5 GdNbO₄ / 0.5 La₂Zr₂O₇ composite was also sintered by a spark plasma sintering (SPS) method at 1600 °C under a pressure of 40 megapascal (MPa) for 10 minutes (mins). The heating and cooling rates were 100 °C/min and 200 °C/min, respectively.

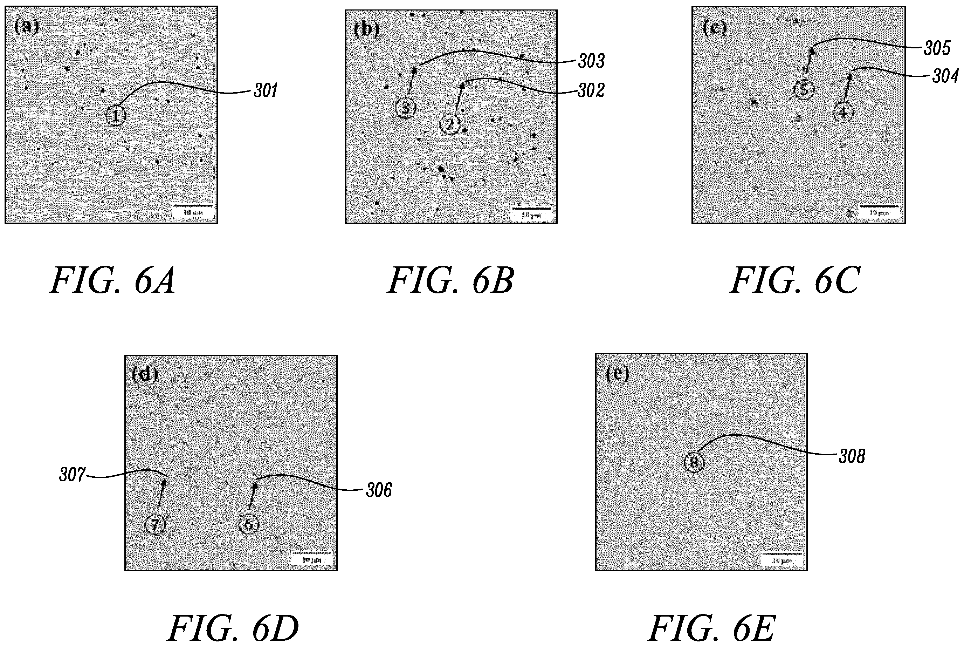

**Figures 6A-6E** are micrographs of a portion of a surface of x GdNbO₄ / (1-x) La₂Zr₂O₇ composites. Specifically, Figures 6A-6D are micrographs of pressure-less sintered x GdNbO₄ / (1-x) La₂Zr₂O₇ composites at 1600 °C for 12 h, where x = 0, x = 0.1, x = 0.3, and x = 0.5; respectively, while Figure 6E is the micrograph of 0.5 GdNbO₄ / 0.5 La₂Zr₂O₇ composite produced via SPS at 1600 °C for 10 mins.

Table 1 summarizes chemical composition corresponding to various points shown in Figures 6A-6E (in at.%).

**Table 1**

| Point | Zirconium (Zr) | Lanthanum (La) | Niobium (Nb) | Gadolinium (Gd) | Oxygen (O) | Main Phase |
|---|---|---|---|---|---|---|
| 301 | 21.6 | 20.7 | - | - | 57.7 | La₂Zr₂O₇ |
| 302 | 9.3 | 25.9 | 3.3 | 1.0 | 60.5 | La₂O₃ |
| 303 | 22.5 | 21.3 | 4.1 | 1.2 | 50.9 | La₂Zr₂O₇ |
| 304 | 3.9 | 17.3 | 18.2 | 2.1 | 58.6 | LaNbO₄ |
| 305 | 18.2 | 16.2 | 5.7 | 3.4 | 56.5 | La₂Zr₂O₇ |
| 306 | 0.4 | 14.9 | 20.1 | 3.8 | 60.7 | LaNbO₄ |
| 307 | 16.4 | 12.1 | 5.2 | 7.3 | 58.9 | La₂Zr₂O₇ |
| 308 | 12.6 | 12.5 | 5.6 | 6.3 | 63.0 | La₂Zr₂O₇ |

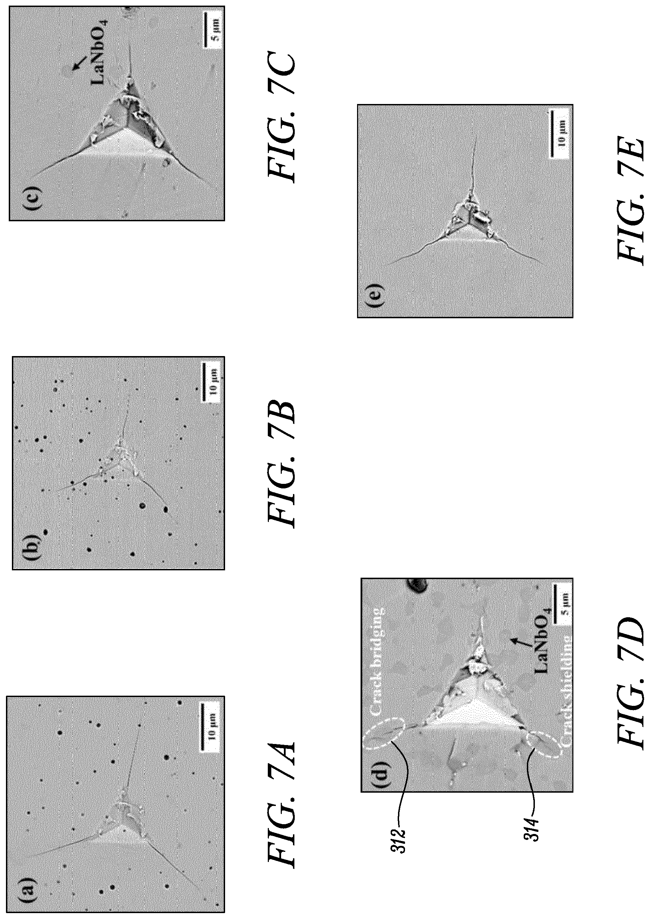

**Figures 7A-7E** are micrographs showing indentation of the surface of x GdNbO₄ / (1-x) La₂Zr₂O₇ composites shown in Figures 6A-6E using Berkovich pyramid indenter.

Specifically, Figures 7A-7D are micrographs showing indentation of the surface of pressure-less sintered x GdNbO₄ / (1-x) La₂Zr₂O₇ composites at 1600 °C for 12 h, where x = 0, x = 0.1, x = 0.3, and x = 0.5; respectively, while Figure 7E is the micrograph showing indentation of the surface of 0.5 GdNbO₄ / 0.5 La₂Zr₂O₇ composite produced via SPS at 1600 °C for 10 mins.

Improvement in fracture toughness is ascribed to crack bridging and shielding mechanisms as shown by a region 312 and a region 314, respectively, in Figure 7D. However, it should be understood that the fracture toughness may be improved through various other toughening mechanisms.

Table 2 summarizes fracture toughness (in MPa m^{1/2}) of the pressure-less sintered x GdNbO₄ / (1-x) La₂Zr₂O₇ (where x = 0, 0.1, 0.3, 0.5) composites at 1600 °C for 12 h and 0.5 GdNbO₄ / 0.5 La₂Zr₂O₇ composite produced via SPS at 1600 °C for 10 mins as determined using Berkovich pyramid indenter.

**Table 2**

| Composition | x = 0 | x = 0.1 | x = 0.3 | x = 0.5 | SPS x = 0.5 |
|---|---|---|---|---|---|
| Fracture toughness | 1.06 ± 0.04 | 1.10 ± 0.04 | 1.41 ± 0.17 | 2.03 ± 0.34 | 1.12 ± 0.02 |

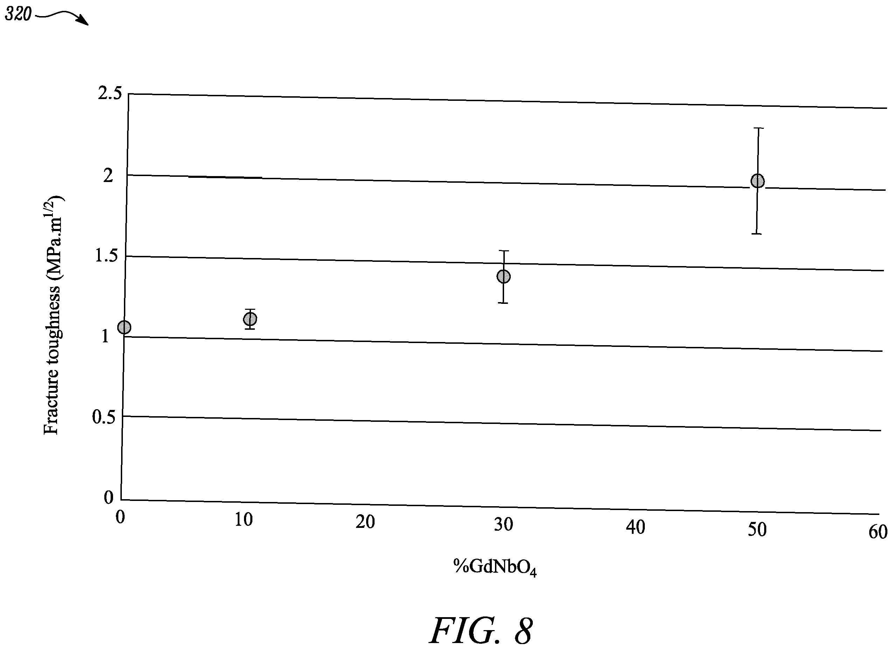

**Figure 8** is a schematic graph 320 showing fracture toughness of lanthanum zirconate (La₂Zr₂O₇) with an increasing mole fraction of gadolinium niobate (GdNbO₄) as determined using Berkovich pyramid indenter. The graph 320 shows that the fracture toughness of lanthanum zirconate (La₂Zr₂O₇) improves with the increasing mole fraction of gadolinium niobate (GdNbO₄).

Further to this, a comparison of the 50 mol.% La₂Zr₂O₇ / 50 mol.% GdNbO₄ material with and without the presence of the LaNbO₄ phase precipitates shows a higher toughness of 2.03 ± 0.34 MPa.m^{1/2} with the precipitates compared with 1.12 ± 0.02 MPa.m^{1/2} without the precipitates.

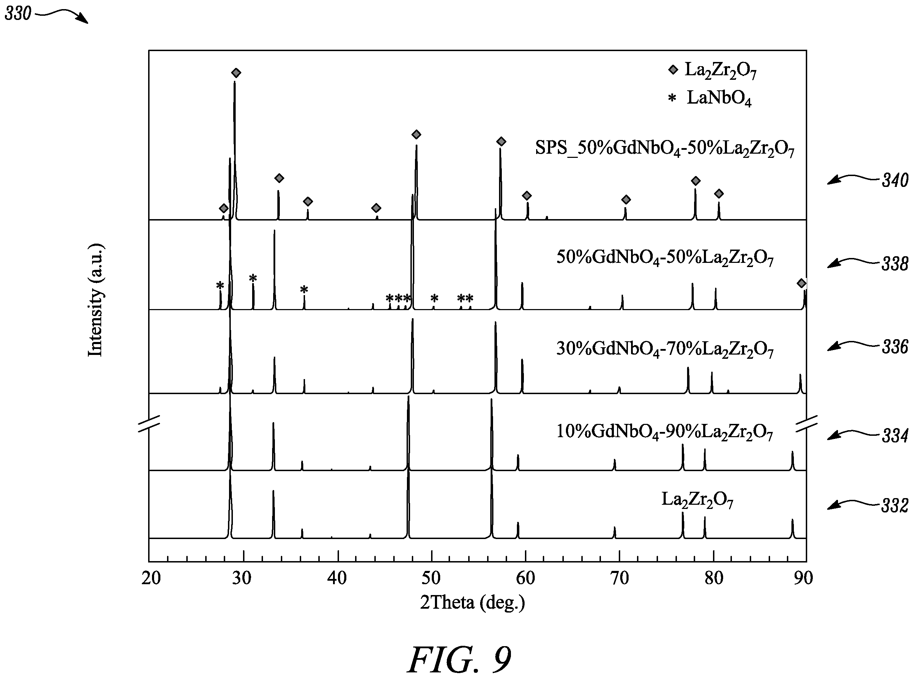

**Figure** 9 is a schematic graph 330 showing x-ray diffraction (XRD) reflections of x GdNbO₄ / (1-x) La₂Zr₂O₇ (where x = 0, 0.1, 0.3, 0.5) composites. Specifically, regions 332, 334, 336, 338 show XRD reflections of pressure-less sintered x GdNbO₄ / (1-x) La₂Zr₂O₇ composites at 1600 °C for 12 h, where x = 0, 0.1, 0.3, 0.5, respectively, while region 340 shows XRD reflection of 0.5 GdNbO₄ / 0.5 La₂Zr₂O₇ composite produced via SPS at 1600 °C for 10 mins.

In some embodiments, the top layer 108 may include a ceramic material, such as yttria-stabilized zirconia (YSZ), however, any other ceramic material may be utilized. Alternative stabilizers for tetragonal phase in zirconia may include cerium (IV) oxide (CeO2), magnesium oxide (MgO), calcium oxide (CaO), or other oxides. In some embodiments, YSZ may include additional elements such as, but are not limited to, titanium dioxide (TiO₂), scandium oxide (Sc₂O₃), aluminium oxide (Al₂O₃), etc. In some embodiments, multi-layer and composition-graded protective coatings composed of the aforementioned materials may be also utilized.

## Claims

1. A barrier coating (110) for a substrate (102) that has a major surface (104), the barrier coating (110) comprises:
a bond coat layer (112) disposed on the major surface (104) of the substrate (102);
a thermally grown oxide (TGO) layer (114) disposed on the bond coat layer (112) opposite to the major surface (104) of the substrate (102); and
at least one top coat layer (116) disposed on the TGO layer (114) opposite to the bond coat layer (112), the at least one top coat layer (116) comprising a ceramic top coat material (120) comprising:
a first phase (122) consisting of a compound having a formula A2B2O7, where A is a rare-earth element, B is selected from the group consisting of zirconium, hafnium and titanium, and O is oxygen; and
a second phase (124) dispersed in the first phase and consisting of a compound having a formula CDO4, where C is a rare-earth element, D is niobium or tantalum, and O is oxygen.

2. The barrier coating of claim 1, wherein each of A and C is selected from the group consisting of gadolinium, lanthanum and yttrium.

3. The barrier coating of claim 2, wherein A is lanthanum and C is gadolinium.

4. The barrier coating of claim 2, wherein each of A and C is lanthanum.

5. The barrier coating of any preceding claim, wherein D is niobium.

6. The barrier coating of any preceding claim, comprising greater than 0 mol.% and less than 100 mol.% of the second phase (124).

7. The barrier coating of any preceding claim, wherein at least one of the first phase (122) and the second phase (124) is configured to react with molten silicates.

8. The barrier coating of any preceding claim, wherein the first phase (122) and the second phase (124) together form 100% by weight of the ceramic top coat material (120).

9. The barrier coating of any preceding claim, wherein the bond coat layer (112) comprises an alloy, and wherein the alloy comprises at least one element selected from the group consisting of aluminium, silicon and chromium.

10. The barrier coating of any preceding claim, wherein the barrier coating (110) is a thermal barrier coating or an environmental barrier coating.

11. A composite article (100) comprising:
a substrate (102) that has a major surface (104); and
a barrier coating (110) of any preceding claim disposed on the major surface (104) of the substrate (102).

12. The composite article of claim 11, wherein the substrate (102) is selected from the group consisting of steels, alloys, superalloys, refractory metals, inter-metallics, and ceramic matrix composite materials.

13. A gas turbine engine (10) including a composite article (100) of claim 11 or 12.

14. A method (210) for manufacturing a component (200) of a gas turbine engine (10), the method (210) comprising coating the component (200) with a barrier coating (110) of any one of claims 1 to 10.

15. The method of claim 14, wherein the component (200) is coated with the barrier coating (110) using at least one of electron-beam physical vapour deposition (EB-PVD), suspension plasma spraying (SPS), solution precursor plasma spraying (SPPS), air plasma spraying (APS), and high-velocity oxygen fuel (HVOF) process.
